# EUROPEAN PATENT APPLICATION

(11) **EP 4 485 202 A1**
(43) Date of publication of application: **01.01.2025**
(21) Application number: 23182108.3
(22) Date of filing: 28.06.2023
(51) Int. Cl.: G06F 9/54

(54) **COMPUTER-IMPLEMENTED METHOD, COMPUTER PROGRAM PRODUCT AND APPARATUS FOR DETECTING AN INTEROPERABILITY BETWEEN A FIRST API ENDPOINT AND A SECOND API ENDPOINT**

(71) Applicant: Siemens Aktiengesellschaft, 80333 München (DE)
(72) Inventor: Bäuml, Daniel, 90431 Nürnberg (DE); Latharani Nataraja, Gowri, 81737 München (DE); Gupta, Rohit, 81379 München (DE)
(74) Representative: Siemens Patent Attorneys

(57) **Abstract**

A computer-implemented method for detecting an interoperability between a first API endpoint and a second API endpoint of multiple API endpoints is proposed. The method includes:
a) providing a first specification describing the first API endpoint and a second specification describing the second API endpoint,
b) performing a comparison scheme based on at least a comparison criteria for comparing a first criteria-specific parameter of the first specification with a second criteria-specific parameter of the second specification for obtaining a criteria-specific comparison result indicating the similarity of the first API endpoint and the second API endpoint, and
c) if the obtained criteria-specific comparison result is positive, performing a first action, and if the criteria-specific comparison result is negative, performing a second action.

## Description

The present invention relates to a computer-implemented method, a computer program product as well as an apparatus for detecting an interoperability between a first API endpoint and a second API endpoint of multiple API endpoints.

APIs (application programming interfaces) can be a central part of the software based part of an industrial system. In addition to components for displaying information to a customer, logical components that execute data storage components and components for data transmission are important components.

APIs define how multiple (API) components of a software interact with each other. When a developer wants to use a software component, the developer uses the API interface to interact with the software components. An API marketplace is a way for companies to list and expose its software offerings to external customers which can browse through the marketplace to find suitable APIs for their solutions.

In the future, APIs listed in the API marketplace can have a large number. Each API in turn can contain multiple API endpoints. There can be one or more services/products that can be integrated together to provide a valuable solution to the customer leveraging the different API functionalities. In order to create a solution, a customer needs to browse through multiple APIs and API endpoints manually. However, from a marketplace, it is not automatically known to a customer what services can be integrated together.

Conventionally, cross-API scenarios were largely developed manually by a project team and implemented accordingly. To build such solutions, it was previously necessary to have both in-depth domain knowledge and a corresponding number of employees in the team who could combine the requirements and use cases with the API products already available. When analyzing the API products offered so far, it was also usually necessary to communicate with the providers of these products to understand the full functionality of the API. Here, it has so far only been possible to derive from the description and documentation how and for which scenarios this API can be used.

Thus, customers can look at various types of APIs offered in the API marketplace and then decide based on the documentation or description whether they can also use the respective API in combination with other APIs and thus generate added value. For larger cross-functional solutions, however, this is a very cumbersome step.

It is one object of the present invention to improve the detection of an interoperability of different APIs.

According to a first aspect, a computer-implemented method for detecting an interoperability between a first API endpoint and a second API endpoint of multiple API endpoints is proposed. The method includes the steps:
a) providing a first specification describing the first API endpoint and a second specification describing the second API endpoint,
b) performing a comparison scheme based on at least a comparison criteria out of multiple comparison criteria for comparing at least a first criteria-specific parameter of the first specification with at least a second criteria-specific parameter of the second specification for obtaining a criteria-specific comparison result indicating the similarity of the first API endpoint and the second API endpoint, wherein the first API endpoint and the second API endpoint are similar if the criteria-specific comparison result is positive, and
c) if the obtained criteria-specific comparison result is positive, performing a first action in connection with a determined entity, and if the criteria-specific comparison result is negative, performing a second action in connection with the determined entity.

According to the first aspect, the detection of an interoperability of different APIs is improved by performing the comparison scheme for obtaining a criteria-specific comparison result indicating the similarity of the first API endpoint and the second API endpoint by which the interoperability between the first API endpoint and the second API endpoint can be derived.

This has the technical effect that by the computer-implemented method according to the first aspect, an automatically performed analysis of multiple APIs with respect to their similarity and interoperability between them is possible without a human analysis and without the intervention of a human being. This has the advantage that it is possible to quickly evaluate a large number of available API products and corresponding API endpoints and determine their technical usability for the determined entity, for example a user, by the API recommendation outputted based on the obtained criteria-specific comparison result.

Further, by the API recommendation outputted based on the obtained criteria-specific comparison result, it is possible to give the user an orientation as to whether the technical products and/or APIs offered fit into his existing product portfolio and whether he can benefit from them.

In particular, a computer-implemented method is a method which utilizes a computer, a computer network or another programmable device, wherein one or multiple features are wholly or partially realized by means of a computer program.

Preferably, the term "interoperability" means the capability of different technical devices or endpoints, such as the first and the second API or the first API endpoint and the second API endpoint, to work together as seamlessly as possible.

For example, a respective API endpoint, such as the first or the second API endpoint, can be embodied as a uniform resource locator address (URL) which indicates the location of a resource on the respective API server. In particular, a respective API endpoint is a digital location which is accessible via the respective API and from which the API receives requests and transmits corresponding responses.

Moreover, a respective specification, for example the first or second specification, can be embodied as a computer or software file. The respective specification can include: a resource of an API, an attribute of an API, a path structure of an API and/or other characteristics which describe the API.

Preferably, the comparison scheme is an algorithm for comparing the respective criteria-specific parameters.

Specifically, two or more API endpoints are defined as "similar" or "having a similarity" if the obtained criteria-specific comparison result is positive. In particular, the obtained criteria-specific comparison result is positive, if two API endpoints have the exact same path structure or the exact same sub path structure, if two API endpoints refer to the same resources, refer to syntactically similar resources or refer to semantically similar resources and/or if two API endpoints have the same attributes or almost similar attributes.

Preferably, the determined entity is a computer. Also, the determined entity can be a human being such as a user or a customer which can actuate the computer.

In particular, by performing the comparison scheme, it is possible to automatically find similar API endpoints that interact with the same or similar resources.

According to an embodiment, step b) further includes:
performing a further comparison scheme based on a comparison criteria out of multiple comparison criteria for comparing a first criteria-specific parameter of the first specification, a second criteria-specific parameter of the second specification and a third criteria-specific parameter of a third specification for obtaining a further criteria-specific comparison result indicating the similarity of the first API endpoint, the second API endpoint and the third API endpoint.

According to a further embodiment, the multiple comparison criteria include a path comparison criteria, a resource comparison criteria and/or an attribute comparison criteria.

According to a further embodiment, when the comparison scheme is performed based on the path comparison criteria for obtaining a path comparison result as the criteria-specific comparison result, the first criteria-specific parameter of the first specification is embodied as a path structure or a sub path structure of the first API endpoint and the second criteria-specific parameter of the second specification is embodied as a path structure or a sub path structure of the second API endpoint.

In particular, the path comparison result indicates the similarity of the first API endpoint and the second API endpoint with respect to their respective path structure or sub path structure. A respective path structure or sub path structure can be a URL address.

According to a further embodiment, when the comparison scheme is performed based on the resource comparison criteria for obtaining a resource comparison result as the criteria-specific comparison result, the first criteria-specific parameter of the first specification is embodied as a resource referenced by the first API endpoint and the second criteria-specific parameter of the second specification is embodied as a resource referenced by the second API endpoint, wherein the similarity of the first API endpoint and the second API endpoint which is indicated by the resource comparison result includes a syntactic similarity and/or semantic similarity.

Preferably, the resource comparison result indicates the similarity of the first API endpoint and the second API endpoint with respect to their respective resource on which they are referencing.

In particular, two API endpoints are syntactically similar with respect to their resources if the names of the resources are grammatically or orthographically the same or similar. Further, two API endpoints are semantically similar with respect to their resources if the meaning of the names of the resources are the same or similar.

According to a further embodiment, when the comparison scheme is performed based on the attribute comparison criteria for obtaining an attribute comparison result as the criteria-specific comparison result, the first criteria-specific parameter of the first specification is embodied as an attribute of the first API endpoint and the second criteria-specific parameter of the second specification is embodied as an attribute of the second API endpoint.

Specifically, the attribute comparison result indicates the similarity of the first API endpoint and the second API endpoint with respect to their respective attribute.

According to a further embodiment, step b) further includes performing of at least two of the following comparison schemes:
performing the comparison scheme based on the path comparison criteria for obtaining the path comparison result,
performing the comparison scheme based on the resource comparison criteria for obtaining the resource comparison result, and
performing the comparison scheme based on the attribute comparison criteria for obtaining the attribute comparison result, wherein step b) further includes:
   storing the obtained path comparison result, the obtained resource comparison result and/or the obtained attribute comparison result in a storage unit.

The term "storing" can also be referred to as "tracking" the obtained path comparison result, the obtained resource comparison result and/or the obtained attribute comparison result and storing the respective result in the storage unit.

According to a further embodiment, step b) further includes:
performing a weighting scheme over all those criteria of the path comparison criteria, the resource comparison criteria and the attribute comparison criteria for which a positive path comparison result, a positive resource comparison result and/or a positive attribute comparison result is obtained for obtaining a weighting result.

In particular, if the respective comparison result is positive, this means that there is a similarity between the respective API endpoints. Thus, for saving computional resources, only those respective comparison criteria for which a positive comparison result was obtained are used for the weighting scheme. Hence, those respective comparison criteria for which a negative comparison result was obtained are omitted when using the weighting scheme.

Preferably, the comparison scheme is an algorithm for comparing the respective criteria-specific parameters.

Moreover, if more than one of the above comparison criteria is fulfilled when comparing the respective API endpoints, this could result in an even higher weighing that goes into the displaying of the weighting result to the determined entity. According to a further embodiment, the first action includes displaying of the respective obtained criteria-specific comparison result, displaying of multiple of the obtained criteria-specific comparison results and/or displaying of the weighting result on a display for the determined entity.

Preferably, by performing the comparison scheme and the weighting scheme, it is possible to automatically display how good API endpoints work together and/or to show the similarity of the first and the second API endpoints in a measurable way. Further, it can be recommended based on the comparison scheme and the weighting scheme whether the combined use of the first and second API endpoints makes sense for the user. This (API) recommendation can be displayed on the determined entity or displayed for a user.

In particular, the second action includes displaying of the respective obtained criteria-specific comparison result and/or displaying of multiple of the obtained criteria-specific comparison results. Specifically, if the respective obtained criteria-specific comparison result is negative, this means that there is no similarity between the first and the second API endpoints.

The display can be part of a computer.

According to a further embodiment, the method includes:
d) outputting an API recommendation based on a respective obtained criteria-specific comparison result, multiple of the obtained criteria-specific comparison results and/or the weighting result on the display to the determined entity, wherein the API recommendation indicates the interoperability between the first API endpoint and the second API endpoint, wherein a positive interoperability between the first API endpoint and the second API endpoint indicates that the first API endpoint and the second API endpoint are combinable.

In particular, a negative interoperability between the first API endpoint and the second API endpoint indicates that the first API endpoint and the second API endpoint are not combinable. Thus, in this case, there is no API recommendation which is outputted to the determined entity or only a displaying on the determined entity that the first API endpoint and the second API endpoint are not combinable is outputted.

Preferably, the term "combinable" indicates whether two API endpoints can be integrated together to create a new API endpoint or a new API or whether two API endpoints can be mapped to each other.

According to a further embodiment, the method includes:
e) if the obtained resource comparison result is positive and there is at least a syntactic similarity or a semantic similarity between the first API endpoint and the second API endpoint,
integrating the first criteria-specific parameter of the first specification embodied as the resource referenced by the first API endpoint into the second criteria-specific parameter of the second specification embodied as the resource referenced by the second API endpoint to obtain a newly defined resource and to obtain an integrated API endpoint including the newly defined resource.

This embodiment has the advantage that the interoperability between the resources of the first and second API endpoints is ensured and supported by the intended recommendation of the transformation or integration between them. In this way, in an advantageous manner, the user can obtain via the determined entity initial indications of how difficult it is to integrate the respective API endpoints or API products together.

Preferably, by integrating the first criteria-specific parameter of the first specification into the second criteria-specific parameter of the second specification, it is possible to automatically transform resources from the first API endpoint into the second API endpoint.

In particular, if there are two API endpoints, for example the first and the second API endpoint, with "similar" resources, which means that the obtained resource comparison result is positive, a recommendation or a suggestion to the determined entity can be outputted indicating that it is possible to integrate these two API endpoints together.

Also, based on the similarity of two API endpoints, the determined entity or a user can create the newly defined resource or a newly defined API endpoint by integrating the two API endpoints together in the integrated API endpoint.

According to a further embodiment, step e) further includes:
if the obtained resource comparison result is positive and there is a similarity between the first API endpoint and the second API endpoint,
mapping specific parameters of the first criteria-specific parameter of the first specification to the same specific parameters of the second criteria-specific parameter of the second specification to implement the specific parameters which are the same in the first criteria-specific parameter of the first specification and in the second criteria-specific parameter of the second specification into the newly defined resource.

Preferably, this embodiment makes it possible to automatically map specific parameters of the first criteria-specific parameter, for example resources, of the first specification to the same specific parameters of the second criteria-specific parameter (the same resource) of the second specification between the first API endpoint and the second API endpoint.

According to a further embodiment, step e) further includes:
if the obtained resource comparison result is negative and there is at least a difference between the first criteria-specific parameter of the first specification embodied as a first resource and the second criteria-specific parameter of the second specification embodied as a second resource,
transforming the name of the first resource, in particular the name of the first resource, to the second resource, in particular to the name of the second resource, to restore the similarity between the first criteria-specific parameter of the first specification and the second criteria-specific parameter of the second specification.

This has the advantage that, when the obtained resource comparison result is negative, it is possible by the transforming, to align the name of the first resource to the name of the second resource to restore the similarity between the first specification and the second specification. Thus, when performing the comparison scheme for the next time, a positive resource comparison result can be obtained on the basis of the first criteria-specific parameter of the first specification and the second criteria-specific parameter of the second specification.

In the same manner, it is possible to add the name of the first resource to the second specification of the second resource to restore the similarity between the first specification and the second specification.

According to a further embodiment, the comparison scheme is performed in dependence on a string comparison, a predetermined language list and/or a library, in particular a natural language processing library.

In particular, this embodiment helps to identify the words in the respective specification of the respective API endpoint in order to determine if there is a similarity between two API endpoints by the comparison scheme.

Any embodiment of the first aspect may be combined with any embodiment of the first aspect to obtain another embodiment of the first aspect.

According to a second aspect, a computer program product is proposed which comprises a program code for executing the above-described computer-implemented method according to the first aspect or one embodiment of the first aspect when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, an apparatus for detecting an interoperability between a first API endpoint and a second API endpoint of multiple API endpoints is proposed. The apparatus includes:
a provision unit for providing a first specification describing the first API endpoint and a second specification describing the second API endpoint,
a first performing unit for performing a comparison scheme based on at least a comparison criteria out of multiple comparison criteria for comparison at least a first criteria-specific parameter of the first specification with at least a second criteria-specific parameter of the second specification for obtaining a criteria-specific comparison result indicating the similarity of the first API endpoint and the second API endpoint, wherein the first API endpoint and the second API endpoint are similar if the criteria-specific comparison result is positive, and
a second performing unit, wherein if the obtained criteria-specific comparison result is positive, the second performing unit is configured to perform a first action in connection with a determined entity, and if the criteria-specific comparison result is negative, the second performing unit is configured to perform a second action in connection with the determined entity.

The technical effects and advantages described for the computer-implemented method according to the first aspect apply equally to the apparatus according to the third aspect.

Further, embodiments and features described with reference to the computer-implemented method according to the first aspect apply mutatis mutandis to the apparatus according to the third aspect.

The respective unit, e.g., the provision unit or the first performing unit, may be implemented in hardware and/or in software. If said unit is implemented in hardware, it may be embodied as a device, e.g., as a computer or as a processor or as a part of a system, e.g., a computer system. If said unit is implemented in software it may be embodied as a computer program product, as a function, as a routine, as a program code or as an executable object.

The apparatus can be a computer, in particular a personal computer or an industrial computer, or an industrial server.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention. Independent of the grammatical term usage, individuals with male, female or other gender identities are included within the term.

Further embodiments, features and advantages of the present invention will become apparent from the subsequent description and dependent claims, taken in conjunction with the accompanying drawings, in which:
- Fig. 1: shows a schematic block diagram of a computer-implemented method for detecting an interoperability between a first API endpoint and a second API end-point;
- Fig. 2: shows a schematic flow chart of the computer-implemented method for detecting the interoperability between the first API endpoint and the second API endpoint according to Fig. 1; and
- Fig. 3: shows a schematic block diagram of an apparatus for detecting an interoperability between a first API endpoint and a second API endpoint.

In the Figures, like reference numerals designate like or functionally equivalent elements, unless otherwise indicated.

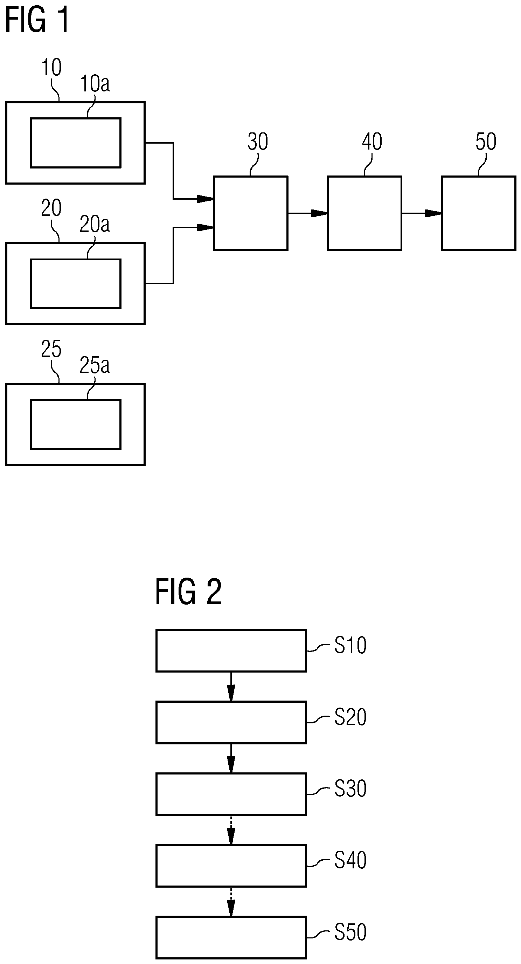

Fig. 1 shows a schematic block diagram of a computer-implemented method for detecting an interoperability between a first API endpoint 10 and a second API endpoint 20 of multiple API endpoints 10, 20, 25. In addition, references to the method steps of Fig. 2, which describes a computer-implemented method for detecting an interoperability between the first API endpoint 10 and the second API endpoint 20 of multiple API endpoints 10, 20, 25, are indicated in parentheses in the following explanations of Fig. 1.

In addition, the schematic block diagram of Fig. 1 shows a comparison scheme 30, a criteria-specific comparison result and an API recommendation 50. In the following, the interaction of the respective blocks of the schematic block diagram of Fig. 1 is explained.

First, a first specification 10a describing the first API endpoint 10 and a second specification 20a describing the second API endpoint 20 are provided (see method step S10 of Fig. 2). The first specification 10a and the second specification 10b are inputted into the comparison scheme 30 which is shown by the respective arrows from the first API endpoint 10 and the second API endpoint 20 to the comparison scheme 30. Further, Fig. 1 also includes a third API endpoint 25 with a third specification 25a which can also be used by the comparison scheme 30.

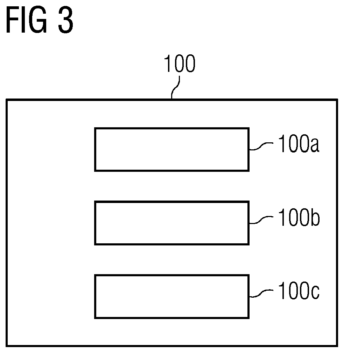

Next, the comparison scheme 30 is performed, for example by an apparatus 100 according to Fig. 3, based on a comparison criteria out of multiple comparison criteria for comparing a first criteria-specific parameter of the first specification 10a with a second criteria-specific parameter of the second specification 20a for obtaining the criteria-specific comparison result 40 indicating the similarity of the first API endpoint 10 and the second API endpoint 20. In Fig. 1, the first API endpoint 10 and the second API endpoint 20 are similar if the criteria-specific comparison result 40 is positive (see method step S20 of Fig. 2).

This comparison scheme 30 is performed in dependence on a string comparison, a predetermined language list or a library, in particular a natural language processing library.

The multiple comparison criteria include a path comparison criteria, a resource comparison criteria and an attribute comparison criteria.

When the comparison scheme 30 is performed based on the path comparison criteria for obtaining a path comparison result as the criteria-specific comparison result 40, the first criteria-specific parameter of the first specification 10a is embodied as a path structure or a sub path structure of the first API endpoint 10 and the second criteria-specific parameter of the second specification 20a is embodied as a path structure or a sub path structure of the second API endpoint 20.

An example for the path comparison criteria and therefore for the first criteria specific parameter of the first specification 10a and the second criteria specific parameter of the second specification 20a is the following:
Determine whether the first and second API endpoints 10, 20 have the exact same path structure:
First API endpoint 10: https://server1.com/api10/resource1/{id}/resource2 (first criteria specific parameter)
Second API endpoint 20: https://server2.com/api20/resource1/{id}/resource2 (second criteria specific parameter)

In this case, the API endpoints 10, 20 have the exact same path structure, namely "resource1/{id}/resource2". Therefore, when performing the comparison scheme based on the path comparison criteria, the criteria-specific comparison result would be positive since the first criteria specific parameter of the first specification 10a and the second criteria specific parameter of the second specification 20a of the respective API endpoints 10, 20 have the exact same path structure.

A further example for the path comparison criteria is the following:
Determine whether the first and second API endpoints 10, 20 have the exact same sub path structure:
First API endpoint 10: https://server1.com/api10/resource1/{id}/resource2/{id}/resour ce3 (first criteria specific parameter)
Second API endpoint 20: https://server2.com/api20/resource1/{id}/resource2 (second criteria specific parameter)

In this case, the API endpoints 10, 20 have the exact same sub path structure, namely "resource1/{id}/resource2". Therefore, when performing the comparison scheme 30 based on the path comparison criteria, the criteria-specific comparison result 40 would be positive. In another case, when the sub path structure would be "/{id}/resource3", then, when performing the comparison scheme 30 based on the path comparison criteria, the criteria-specific comparison result 40 would be negative since this sub path is only included in the first specification 10a and not in the second specification 20a.

Otherwise, when the comparison scheme 30 is performed based on the resource comparison criteria for obtaining a resource comparison result as the criteria-specific comparison result 40, the first criteria-specific parameter of the first specification 10a is embodied as a resource referenced by the first API endpoint 10 and the second criteria-specific parameter of the second specification 20a is embodied as a resource referenced by the second API endpoint 20. Here, the similarity of the first API endpoint 10 and the second API endpoint 20 which is indicated by the resource comparison result includes a syntactic similarity or semantic similarity.

An example for the resource comparison criteria is the following:
Determine whether the first and second API endpoints 10, 20 refer to the same resource:
First API endpoint 10: https://server1.com/api10/asset/123?name=Company1 (first criteria specific parameter)
Second API endpoint 20: https://server2.com/api20/asset/{Company1} (second criteria specific parameter)

In this case, the API endpoints 10, 20 have the same asset which is embodied as the resource, namely "Company1". Therefore, when performing the comparison scheme 30 based on the resource comparison criteria, the criteria-specific comparison result 40 would be positive since the first criteria specific parameter of the first specification 10a and the second criteria specific parameter of the second specification 20a of the respective API endpoints 10, 20 refer to the same resource.

A further example for the resource comparison criteria is the following:
Determine whether the first and second API endpoints 10, 20 refer to syntactically similar resources, namely for example "Asset" vs. "Assets":
First API endpoint 10: https://server1.com/api10/asset/123 (first criteria specific parameter)
Second API endpoint 20: https://server2.com/api20/assets/123 (second criteria specific parameter)

In this case, the API endpoints 10, 20 refer to syntactically similar resources, namely "Asset" and "Assets". Therefore, when performing the comparison scheme 30 based on the resource comparison criteria, the criteria-specific comparison result 40 would be positive since the first criteria specific parameter of the first specification 10a and the second criteria specific parameter of the second specification 20a of the respective API endpoints 10, 20 refer to syntactically similar resources.

Another example for the resource comparison criteria is the following:
Determine whether the first and second API endpoints 10, 20 refer to semantically similar resources. An example of semantically similar resources are ["car", "vehicle", "automobile", "motorcar", "roadster", "van", "limousine"].
First API endpoint 10: https://server1.com/api10/car/123 (first criteria specific parameter)
Second API endpoint 20: https://server2.com/api20/automobile/123 (second criteria specific parameter)

In this case, the API endpoints 10, 20 refer to semantically similar resources, namely "car" and "automobile". Therefore, when performing the comparison scheme 30 based on the resource comparison criteria, the criteria-specific comparison result 40 would be positive since the first criteria specific parameter of the first specification 10a and the second criteria specific parameter of the second specification 20a of the respective API endpoints 10, 20 refer to semantically similar resources.

Alternatively, when the comparison scheme 30 is performed based on the attribute comparison criteria for obtaining an attribute comparison result as the criteria-specific comparison result 40, the first criteria-specific parameter of the first specification 10a is embodied as an attribute of the first API endpoint 10 and the second criteria-specific parameter of the second specification 20a is embodied as an attribute of the second API endpoint 20.

An example for the attribute comparison criteria is the following:
Determine whether the first and second API endpoints 10, 20 refer to the same and/or almost similar attributes:
First API endpoint 10: https://server1.com/api10/assets/123 return "Asset"
→ Asset with attributes [manufacturer, spare part number] (first criteria specific parameter)
Second API endpoint 20: https://server2.com/api2/product/123 return "Product"
→ Asset with attributes [size, price, producer, spare part number] (second criteria specific parameter)

In this case, the API endpoints 10, 20 refer to two attributes which are the same, namely "spare part number" and two attributes which are semantically similar, namely "manufacturer" and "producer". Therefore, when performing the comparison scheme 30 based on the attribute comparison criteria, the criteria-specific comparison result 40 would be positive since the first criteria specific parameter of the first specification 10a and the second criteria specific parameter of the second specification 20a of the respective API endpoints 10, 20 refer to the same and almost similar attributes.

Moreover, the performing of the comparison scheme 30 according to method step S20 of Fig. 2 further includes performing of at least two of the following comparison schemes:
performing the comparison scheme 30 based on the path comparison criteria for obtaining the path comparison result,
performing the comparison scheme 30 based on the resource comparison criteria for obtaining the resource comparison result, and
performing the comparison scheme 30 based on the attribute comparison criteria for obtaining the attribute comparison result, wherein the performing of the comparison scheme 30 further includes:
   storing the obtained path comparison result, the obtained resource comparison result and/or the obtained attribute comparison result in a storage unit.

In addition, the performing of the comparison scheme 30 according to method step S20 of Fig. 2 further includes:
performing a weighting scheme over all those criteria of the path comparison criteria, the resource comparison criteria and the attribute comparison criteria for which a positive path comparison result, a positive resource comparison result and/or a positive attribute comparison result is obtained for obtaining a weighting result.

Then, if the obtained criteria-specific comparison result 40 is positive, a first action in connection with a determined entity is performed, for example also by the apparatus 100, and if the criteria-specific comparison result 40 is negative, a second action in connection with the determined entity is performed (see method step S30 of Fig. 2).

Here, the performing of the first action according to method step S30 of Fig. 2 includes displaying of the respective obtained criteria-specific comparison result 40, displaying of multiple of the obtained criteria-specific comparison results 40 or displaying of the weighting result on a display for the determined entity.

The displaying of the multiple of the obtained criteria-specific comparison results 40 and of the weighting result on a display for the determined entity can have the following structure:
- 50 % of the paths are similar
- 73 % of the resources are similar, but only 24 % of the similar resources show related number of attributes, and

▪ The given API endpoints 10, 20 using four resources that are semantically similar ("car" and "vehicle").

Fig. 2 shows a schematic flow chart of the computer-implemented method for detecting the interoperability between the first API endpoint 10 (see Fig. 1) and the second API endpoint (see Fig. 1) according to Fig. 1. The respective method steps S10 - S30 of the computer-implemented method have already been explained above in terms of Fig. 1, which is why, in order to avoid repetitions, the method steps S10 - S30 are not explained again.

Further, embodiments of the computer-implemented method of Fig. 2 include the method steps S40 and S50, which is why method steps S40 and S50 are connected with the method steps S10 - S30 in Fig. 2 with a dotted line.

Moreover, method step S40 of Fig. 2 includes:
outputting an API recommendation 50 (see Fig. 1) based on a respective obtained criteria-specific comparison result 40 (see Fig. 1), multiple of the obtained criteria-specific comparison results 40 and/or the weighting result on the display to the determined entity, wherein the API recommendation 50 indicates the interoperability between the first API endpoint 10 and the second API endpoint 20. Here, a positive interoperability between the first API endpoint 10 and the second API endpoint 20 indicates that the first API endpoint 10 and the second API endpoint 20 are combinable.

Further, if the obtained resource comparison result is positive and there is at least a syntactic similarity or a semantic similarity between the first API endpoint 10 and the second API endpoint 20, method step S50 includes:
integrating the first criteria-specific parameter of the first specification 10a (see Fig. 1) embodied as the resource referenced by the first API endpoint 10 into the second criteria-specific parameter of the second specification 20a (see Fig. 1) embodied as the resource referenced by the second API endpoint 20 to obtain a newly defined resource and to obtain an integrated API endpoint including the newly defined resource.

This is shown based on the following two examples:

### Example 1:

A first example for an API recommendation or an API integration proposal to the determined entity could be a Maps API endpoint which returns location resources as a response. Further, there could be public transport API endpoint which provides information on which location a particular bus is currently located. Then, these two API endpoints (Maps API endpoint and public transport API endpoint) can be used by the determined entity or a user to obtain or create a newly defined resource by integrating these two API endpoints into one integrated API endpoint which displays all the buses that are currently approaching a particular location and their routes.

### Example 2:

A second example for an API recommendation or an API integration proposal to the determined entity could be how the both API endpoints from Example 1 can be integrated or transformed into the newly defined resource or the integrated API endpoint.

That means if in the Maps API endpoint, the location is defined in a certain structure as a resource, the integration (API) recommendation needs to take into account how this resource could be mapped to the public transport API endpoint.

For example, if the location resource from the Maps API endpoint has the attributes [id, longitude, latitude, name] and the location resource from the public transport API endpoint has the attributes [id, street, zip code, country] the recommendation to enable an integration of both API endpoints could define a new location resource as the following:
Newly defined location resource: [id, longitude, latitude, name, street, zip code, country]

In this example, the attributes "longitude, latitude, name" from the Maps API endpoint are integrated together with the attributes "street, zip code, country" from the public transport API endpoint into the above newly defined location resource.

Additionally, the specific parameter "id" of the first criteria-specific parameter of the first specification 10a of the Maps API endpoint is mapped to the same specific parameters "id" of the second criteria-specific parameter of the second specification 20a of the public transport API endpoint to implement the specific parameters, which are the same in the first criteria-specific parameter of the first specification 10a and in the second criteria-specific parameter of the second specification 20a, into the newly defined resource.

Furthermore, if the obtained resource comparison result is positive and there is a similarity between the first API endpoint 10 and the second API endpoint 20, method step S50 further includes:
mapping specific parameters of the first criteria-specific parameter of the first specification 10a to the same specific parameters of the second criteria-specific parameter of the second specification 20a to implement the specific parameters, which are the same in the first criteria-specific parameter of the first specification 10a and in the second criteria-specific parameter of the second specification 20a, into the newly defined resource.

Fig. 3 shows a schematic block diagram of an apparatus 100 for detecting an interoperability between a first API endpoint 10 (see Fig. 1) and a second API endpoint 20 (see Fig. 1) of multiple API endpoints 10, 20, 25 (see Fig. 1). The apparatus 100 includes a provision unit 100a, a first performing unit 100b and a second performing unit 100c.

The provision unit 100a is configured to provide a first specification 10a (see Fig. 1) describing the first API endpoint 10 and a second specification 20a (see Fig. 1) describing the second API endpoint 20.

Further, the first performing unit 100b is configured to perform a comparison scheme 30 (see Fig. 1) based on at least a comparison criteria out of multiple comparison criteria for comparison at least a first criteria-specific parameter of the first specification 10a with at least a second criteria-specific parameter of the second specification 20a for obtaining a criteria-specific comparison result 40 (see Fig. 1) indicating the similarity of the first API endpoint 10 and the second API endpoint 20. Moreover, the first API endpoint 10 and the second API endpoint 20 are similar if the criteria-specific comparison result 40 is positive.

In addition, the second performing unit 100c is configured to, if the obtained criteria-specific comparison result 40 is positive, perform a first action in connection with a determined entity, and if the criteria-specific comparison result 40 is negative, the second performing unit 100c is configured to perform a second action in connection with the determined entity.

Although the present invention has been described in accordance with preferred embodiments, it is obvious for the person skilled in the art that modifications are possible in all embodiments.

### Reference Numerals:

- 10: first API endpoint
- 10a: first specification
- 20: second API endpoint
- 20a: second specification
- 25: third API endpoint
- 25a: third specification
- 30: comparison scheme
- 40: criteria-specific comparison result
- 50: API recommendation
- 100: apparatus
- 100a: provision unit
- 100b: first performing unit
- 100c: second performing unit

- S10 - S50: method steps

## Claims

1. Computer-implemented method for detecting an interoperability between a first API endpoint (10) and a second API endpoint (20) of multiple API endpoints (10, 20, 25), the method including:
a) providing (S10) a first specification (10a) describing the first API endpoint (10) and a second specification (20a) describing the second API endpoint (20),
b) performing (S20) a comparison scheme (30) based on at least a comparison criteria out of multiple comparison criteria for comparing at least a first criteria-specific parameter of the first specification (10a) with at least a second criteria-specific parameter of the second specification (20a) for obtaining a criteria-specific comparison result (40) indicating the similarity of the first API endpoint (10) and the second API endpoint (20), wherein the first API endpoint (10) and the second API endpoint (20) are similar if the criteria-specific comparison result (40) is positive, and
c) if the obtained criteria-specific comparison result (40) is positive, performing (S30) a first action in connection with a determined entity, and if the criteria-specific comparison result (40) is negative, performing (S30) a second action in connection with the determined entity.

2. The method according to claim 1,
**characterized in**
**that** the multiple comparison criteria include a path comparison criteria, a resource comparison criteria and/or an attribute comparison criteria.

3. The method according to claim 2,
**characterized in**
**that**, when the comparison scheme (30) is performed based on the path comparison criteria for obtaining a path comparison result as the criteria-specific comparison result (40), the first criteria-specific parameter of the first specification (10a) is embodied as a path structure or a sub path structure of the first API endpoint (10) and the second criteria-specific parameter of the second specification (20a) is embodied as a path structure or a sub path structure of the second API endpoint (20).

4. The method according to claim 2 or 3,
**characterized in**
**that**, when the comparison scheme (30) is performed based on the resource comparison criteria for obtaining a resource comparison result as the criteria-specific comparison result (40), the first criteria-specific parameter of the first specification (10a) is embodied as a resource referenced by the first API endpoint (10) and the second criteria-specific parameter of the second specification (20a) is embodied as a resource referenced by the second API endpoint (20), wherein the similarity of the first API endpoint (10) and the second API endpoint (20) which is indicated by the resource comparison result includes a syntactic similarity and/or semantic similarity.

5. The method according to any one of claims 2 - 4,
**characterized in**
**that**, when the comparison scheme (30) is performed based on the attribute comparison criteria for obtaining an attribute comparison result as the criteria-specific comparison result (40), the first criteria-specific parameter of the first specification (10a) is embodied as an attribute of the first API endpoint (10) and the second criteria-specific parameter of the second specification (20a) is embodied as an attribute of the second API endpoint (20).

6. The method according to any one of claims 2 - 5,
**characterized in**
**that** step b) (S20) further includes performing of at least two of the following comparison schemes:
performing the comparison scheme (30) based on the path comparison criteria for obtaining the path comparison result,
performing the comparison scheme (30) based on the resource comparison criteria for obtaining the resource comparison result, and
performing the comparison scheme (30) based on the attribute comparison criteria for obtaining the attribute comparison result, wherein step b) (S20) further includes:
storing the obtained path comparison result, the obtained resource comparison result and/or the obtained attribute comparison result in a storage unit.

7. The method according to claim 6,
**characterized in**
**that** step b) (S20) further includes:
performing a weighting scheme over all those criteria of the path comparison criteria, the resource comparison criteria and the attribute comparison criteria for which a positive path comparison result, a positive resource comparison result and/or a positive attribute comparison result is obtained for obtaining a weighting result.

8. The method according to claim 7,
**characterized in**
**that** the first action includes displaying of the respective obtained criteria-specific comparison result (40), displaying of multiple of the obtained criteria-specific comparison results (40) and/or displaying of the weighting result on a display for the determined entity.

9. The method according to claim 8,
**characterized by**:
d) outputting (S40) an API recommendation (50) based on a respective obtained criteria-specific comparison result (40), multiple of the obtained criteria-specific comparison results (40) and/or the weighting result on the display to the determined entity, wherein the API recommendation (50) indicates the interoperability between the first API endpoint (10) and the second API endpoint (20), wherein a positive interoperability between the first API endpoint (10) and the second API endpoint (20) indicates that the first API endpoint (10) and the second API endpoint (20) are combinable.

10. The method according to any one of claims 4 - 9, **characterized by**:
e) if the obtained resource comparison result is positive and there is at least a syntactic similarity or a semantic similarity between the first API endpoint (10) and the second API endpoint (20),
integrating (S50) the first criteria-specific parameter of the first specification (10a) embodied as the resource referenced by the first API endpoint (10) into the second criteria-specific parameter of the second specification (20a) embodied as the resource referenced by the second API endpoint (20) to obtain a newly defined resource and to obtain an integrated API endpoint including the newly defined resource.

11. The method according to claim 10,
**characterized in**
**that** step e) (S50) further includes:
if the obtained resource comparison result is positive and there is a similarity between the first API endpoint (10) and the second API endpoint (20),
mapping specific parameters of the first criteria-specific parameter of the first specification (10a) to the same specific parameters of the second criteria-specific parameter of the second specification (20a) to implement the specific parameters which are the same in the first criteria-specific parameter of the first specification (10a) and in the second criteria-specific parameter of the second specification (20a) into the newly defined resource.

12. The method according to any one of claims 1 - 11,
**characterized in**
**that** the comparison scheme (30) is performed in dependence on a string comparison, a predetermined language list and/or a library, in particular a natural language processing library.

13. A computer program product comprising a program code for executing the computer-implemented method according to one of claims 1 - 12 when run on at least one computer.

14. Apparatus (100) for detecting an interoperability between a first API endpoint (10) and a second API endpoint (20) of multiple API endpoints (10, 20, 25), the apparatus (100) including:
a provision unit (100a) for providing a first specification (10a) describing the first API endpoint (10) and a second specification (20a) describing the second API endpoint (20),
a first performing unit (100b) for performing a comparison scheme (30) based on at least a comparison criteria out of multiple comparison criteria for comparison at least a first criteria-specific parameter of the first specification (10a) with at least a second criteria-specific parameter of the second specification (20a) for obtaining a criteria-specific comparison result (40) indicating the similarity of the first API endpoint (10) and the second API endpoint (20), wherein the first API endpoint (10) and the second API endpoint (20) are similar if the criteria-specific comparison result (40) is positive, and
a second performing unit (100c), wherein if the obtained criteria-specific comparison result (40) is positive, the second performing unit (100c) is configured to perform a first action in connection with a determined entity, and if the criteria-specific comparison result (40) is negative, the second performing unit (100c) is configured to perform a second action in connection with the determined entity.
